# EUROPEAN PATENT APPLICATION

(11) **EP 1 838 065 A1**
(43) Date of publication of application: **26.09.2007**
(21) Application number: 06005653.8
(22) Date of filing: 20.03.2006
(51) Int. Cl.: H04L 29/06

(54) **Apparatus & method for assuring MIPv6 functionality after handover**

(71) Applicant: SIEMENS AKTIENGESELLSCHAFT, 80333 München (DE)
(72) Inventor: Premec, Domagoj, 10010 Zagreb (HR)

(57) **Abstract**

A network is provided that supports a mobile station with IPv6 functionality after handover. An access router applies a home link prefix. The mobile station is handed over to a target access router. The target access router receives the home link prefix. The target access router advertises the home link prefix to the mobile station.

## Description

### Technical Field

The invention relates to assuring functionality after handover and, more particularly, to providing MIPv6 functionality to an IPv6 network after a handover.

### Description

IPv6 (Internet Protocol Version 6) is the latest level of the Internet Protocol (IP) and is now included as part of IP support in many products including the major computer operating systems. IPv6 has also been called "IPng" (IP Next Generation). Formally, IPv6 is a set of specifications from the Internet Engineering Task Force (IETF). IPv6 was designed as an evolutionary set of improvements to the current IP Version 4. Network hosts and intermediate nodes with either IPv4 or IPv6 can handle packets formatted for either level of the Internet Protocol. Users and service providers can update to IPv6 independently without having to coordinate with each other.

Mobile IPv6 (MIPv6) is a protocol developed as a subset of Internet Protocol version 6 (IPv6) to support mobile connections. MIPv6 is an update of the IETF (Internet Engineering Task Force) Mobile IP standard (RFC 2002) designed to authenticate mobile devices (known as mobile nodes) using IPv6 addresses.

The goal of the WiMAX Forum is to produce the standard for network architecture for networks based on the IEEE 802.16 wireless technology. The WiMAX network consists of a CSN, which is comparable to core network, and the ASN, which has the role of wireless access network. ASN and CSN could be operated by different business entities (operators).

According to WiMAX Forum Network Architecture subgroup, the first release of a WiMAX certified networks will require IPv6 devices to implement the Mobile IPv6 stack [4] in order to use services of a WiMAX network. As the commercial operating systems today doesn't include the MIPv6 stack (but both Windows and Linux support IPv6), laptops and PDAs with a WiMAX card plugged in will not be able to attach to the WiMAX network as IPv6 devices. Thus a large base of potential WiMAX customers that exists today is excluded from Rel. 1 WiMAX networks.

The NWG stage 2 text [1] does not currently specify any support for simple IPv6 MS, a simple IPv6 device being one that has no Mobile IP stack. That is, only the MIPv6 capable MS-es can attach and use the services of the WiMAX network.

Thus, the state of the art lacks the ability to provide MIPv6 functionality to IPv6.

As additional problem exists. In particular, after the MS is handed off there is no mechanism in the present IPv6 to provide the new access router with the same MIPv6 functionality in the first instance.

This proposal presents a solution how the WiMAX network could support simple IPv6 MS-es by providing the proxy client MIPv6 functionality within the network. The solution presented here is compatible with the WiMAX Forum Rel. 1 draft standard [1] and will be proposed to WiMAX Forum for adoption into the standard. However, the invention may be used with any network.

Gundavelli K Leung Cisco Systems S: "Localized Mobility Management using Proxy Mobile Ipv6" IETF Standard Working Draft, Internet Engineering Task Force, IETF, CH, 8 November 2005, XP 015042203 ISSN: 0000-0004, describes spoofing mobile stations to be on the same link, which is the Local Network Prefix, even if the MPA changed during handovers. However, this does not discuss what happens to the home link prefix.

EP Patent Application 1 460 815 describes distributing home address prefix information to a mobile terminal when the home network has moved. However, this patent application is not concerned with handovers of the mobile station.

### Objects And Summary Of The Invention

The invention solves this problem according to claim 1, which claims a method for providing a network that supports a mobile station with IPv6 functionality after handover, the network performing the steps of:
- an access router applying a home link prefix,
- handing over the mobile station to a target access router,
- receiving by the target access router the home link prefix,
characterized in that the target access router advertises the home link prefix to the mobile station.

This solution has the advantage that the IPv6 retains the MIPv6 functionality even if a handover occurs.
2. The method of claim 1, further comprising the step of advertising by a target access router, after handover from the access router, the home link prefix to the mobile station.
3. The method of the preceding claims, further comprising the step of all access routers of the mobile station advertise the same home prefix link.
4. The method of the preceding claims, further comprising the step of acquiring the home link prefix during authentication.
5. The method of the preceding claims, further comprising the step of generating a neighbor solicitation packet by the mobile station for the access router.
6. The method of the preceding claims, further comprising the step of generating by the a binding update message for a home agent.
7. The method of the preceding claims, further comprising the step of generating by the home agent a binding acknowledgement signal for the access router.
8. A network that provides IPv6 functionality established according to the method of any of the preceding claims.
9. The network of claim 8, wherein the network is WiMAX.

### Brief Description Of The Drawings

Fig. 1 illustrates a call flow of the invention connecting to the Network, and
Fig. 2 illustrates a call flow of the invention during a hand over.

### Detailed Description

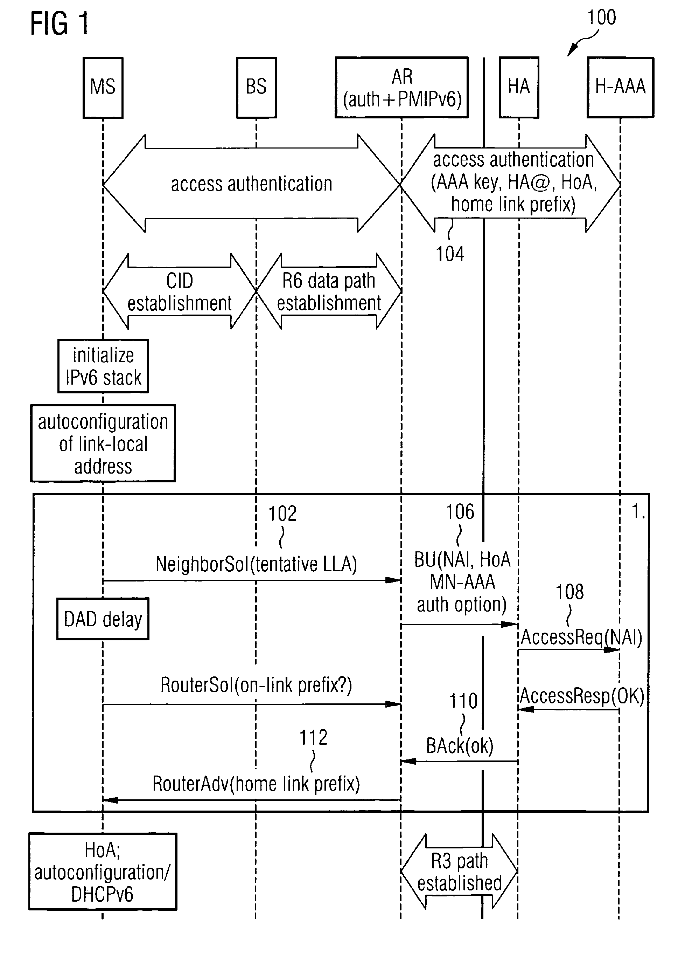

The proposed solution shall be discussed with reference to Fig. 1 which illustrates attachment to a network.

WiMAX Forum network architecture [1] defines a procedure 100 how the Mobile IPv6 capable MS attaches to the WiMAX network, but it says nothing about simple IPv6 (i.e. not MIP capable) devices. When the simple IPv6 MS attaches to the WiMAX network, the process is the same as for the MIPv6 capable devices up to point when MS performs DAD for its link local address. Figure illustrates what happens when simple IPv6 node attaches to a WiMAX network.

In the figure 1, the process of attachment is the same as described in 7.8.2.5. (CMIPv6 R3 Mobility Management) up until the box labeled 1. The part of the flow shown in the box "1." is specific to PMIPv6.

When the MS initializes the IPv6 stack for its WIMAX interface, first the link-local address must be assigned for the new interface. The MS forms the link local address by using the well-known prefix and appending a 64-bit interface identifier to it. The MS can generate an interface identifier based on its 48-bit IEEE MAC address, or it can use any other means for generating it (like cryptographic procedures, in order to ensure location privacy). Whatever method the MS has chosen, it must perform duplicate address detection (DAD) process for this address in order to verify that no other node is using this address [3].

The access router (AR) is the first hop from the perspective of the MS. When AR receives the NeighborSolicitation packet from the MS, it verifies that the proposed address is not already used by any other MS attached to it. The AR may allow MS to autoconfigure its address only based on its IEEE MAC address, or it may also allow it to generate cryptographically based address - this is a policy decision of the NAP. It case the AR doesn't want to allow the proposed LLA, it will respond immediately with NeighborAdvertisment as indicated by 102.

The AR uses the LLA DAD as a trigger to instantiate the PMIPv6 client for the MS. The PMIPv6 client is always collocated with authenticator. When the PMIPv6 client is instantiated, it will immediately register itself with the home agent. The PMIPv6 client is given the MIPv6 related parameters (like HA address, home link prefix, NAI, HoA and necessary security keys) by the authenticator which received them during the authentication step from H-AAA as indicated by the arrow 104.

The DAD for LLA is used to trigger the PMIPv6 client here as an example of one embodiment and other implementations of the PMIPv6 client are possible. The reason the DAD is used here is that in many cases there will never be the DAD for HoA address. According to [3], if the DAD for LLA was successful, IPv6 node doesn't have to perform the DAD for additionally autoconfigured addresses, as long as this additional addresses use the same 64 bits for the interface identifier part as the LLA. Typically, the MS will use the same interface identifier for both the LLA and HoA. Consequently, it will perform DAD only once, when it verifies the LLA. Additionally, RFC 3344 [4] explicitly assumes that the mobile node's CoA and its link-local address have the same interface identifier.

The PMIPv6 client now has to construct the MIPv6 Binding update message and register itself with the HA as indicated by the arrow 106. For that purpose, PMIPv6 client must choose the HoA address and CoA address to be used in the BU message. If the HoA address was given to the PMIPv6 client by the authenticator, PMIPv6 client will use this address. If PMIPv6 client wasn't given the HoA address, it will generate the HoA itself. For that purpose, it will extract the interface identifier part from the LLA and append it to the home link prefix. Next, the PMIPv6 client constructs the CoA by appending the interface identifier part of HoA to the prefix the AR is advertising to CMIPv6 nodes (i.e. the prefix that is topologically correct for AR's part of the network).

It would also be possible for the AR to use one of its own addresses as a CoA, and to use this same CoA for different MS-es (like in MIPv4). But this might bring an issue with HA, since HA may be expecting (and checking) that each MS has its own unique CoA. So the recommended way is to use different CoA-s for different clients.

After deciding which HoA and CoA to use, the PMIPv6 client constructs the Binding Update message in the same way as the MS would do according to 7.8.2.5. (CMIPv6 R3 Mobility Management), including the necessary authentication extensions and sends it to the HA.

There is no special HA behavior required to support PMIPv6. The HA is not even aware that the BU message was not generated by the actual MS. The HA will interact with AAA as indicated by 108, verify authentication extension(s), protect the HoA by performing proxy DAD and send a Binding Acknowledgment message indicating success back to the PMIPv6 client as indicated by 110.

In order to configure its global unicast address (or site-local address), the MS will solicit the RouterAdvertisment in order to learn the on-link prefix. The AR responds with the RouterAdvertisement. Alternatively, the AR may send unsolicited RouterAdvertisment to the MS, before the MS requested it as indicated by 112. The RouterAdvertisment message will contain the home link prefix of the MS, as received during the authentication step from H-AAA. The AR may allow autoconfiguration of addresses based on advertised prefix, or it can mandate the statefull configuration by setting the "M" flag appropriately. Dependant on the chosen method, the MS will either autoconfigure its global unicast address, or it will use DHCPv6 to obtain it. Whatever method is used, it makes no difference to PMIPv6 procedure.

If the MS performs the DAD for its unicast (site-local) address, the AR will check the tentative address being verified against the HoA address it registered with the HA. If they are different, the PMIPv6 client will update the binding with the HA using the address being verified as the HoA. Of course, this is subject to the policy of the NAP which may only allow for HoA addresses as specified by H-AAA server during authentication, or based on the MS MAC address. In such cases, the AR may respond with the Neighbor Advertisement informing the MS that the tentative address is already in use effectively disabling the MS to use the tentative address.

After successfully registering with the HA, the PMIPv6 client will start the PMIPv6 Assistant Function. The PMIPv6 Assistant Function is always located on the bearer path to the MS. In contrast, the PMIPv6 client is always collocated with the authenticator, and since authenticator never moves (except after re-authentication), it is not always on the MS bearer path. As the MS moves from BS to BS, the PMIPv6 Assistant Function will follow it, but the PMIPv6 client will remain with the authenticator of the MS. The fact that the authenticator is not allowed to move is the main reason for having separate PMIPv6 client and PMIPv6 Assistant functions. If the authenticator could move, than the PMIPv6 client would also move together with it, and there would be no need for two separate PMIPv6 functions. If the NWG ever allows the authenticator to move, then the PMIPv6 Assistant Function will become part of a PMIPv6 client.

Initially, the PMIPv6 Assistant Function is collocated with the PMIPv6 client. The PMIPv6 Assistant function takes care of MS data plane: it is the tunnel end point and encapsulates and decapsulates the traffic on behalf of the MS. In the uplink direction, the PMIPv6 Assistant function takes the MS packets coming out of the R6 (and also R4) data path, encapsulates them using the CoA registered with the HA and sends the encapsulated packets via the R3 to the HA. In the downlink direction, when the AR receives the packet from HA, the AR first identifies the MS which should receive the packet based on destination address (in either the outer or the inner header). Having identified the MS, it hands the packet over to the associated PMIPv6 Assistant function which decapsulates it and sends it via the appropriate R6 (R4) tunnel to the MS.

The fact that the AR advertises the home link prefix in the RouterAdvertisement will effectively disable the MIPv6 stack on the MS-es that implement the MIPv6 stack. There are no interworking issues with the MIPv6 enabled MS-es, since per [4] they don't use the MIPv6 stack when they are attached to the home link - they behave like simple IPv6 devices. So, the ASN supporting PMIPv6 as described here will support seamlessly both the simple IPv6 and MIPv6 enabled devices. For both types of devices IP mobility will be performed by the network.

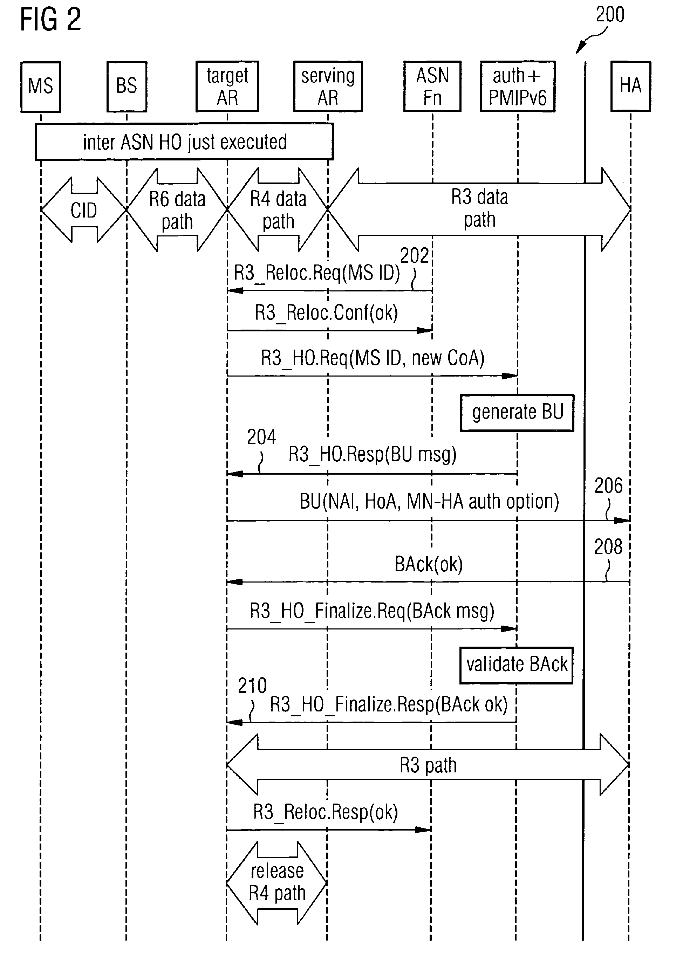

The handover of the mobile stations will now be discussed with reference to Fig. 2, which particularly illustrates a handover 200 involving a CoA address change. It is particularly described how the MIP handover is handled by the proxy MIPv6 enabled ASN.

As should be recognized from the call flow, the MS is not involved in the R3 handover process. The handover transparently to the MS, everything is completely handled within the network. An added benefit compared to the CMIPv6 handover is that there is no interruption of MS traffic at all (in the CMIPv6 case, the MS needs to perform DAD for the new CoA, which causes the interruption of more then 1 second).

The R3 handover is triggered by the ASN functional entity which sends the R3_Relocation.Request to the target AR 202. Target AR is aware that the MS in question is provided with the PMIPv6 support by the network (this info is part of the MS context).

Therefore, the target AR instantiates the new PMIPv6 Assistance Functions for that MS. The instantiated PMIPv6 Assistant function formulates the new CoA using the prefix topologically correct for the target AR. It then sends the CoA in the R3_Handover.Request message to the PMIPv6 client 204 requesting it to generate the valid Binding update message. Only the PMIPv6 client can generate valid Binding update message on behalf of the MS since this is the only entity in possession of the necessary security keys. Having generated the Binding Update message 206, the PMIPv6 client encapsulates it into the R3_Handover.Response message and sends it back to the PMIPv6 Assistant function.

The PMIPv6 Assistant function decapsulates the Binding update message and sends it via R3 interface to the HA. The HA, completely unaware of this manipulations, responds with Binding Acknowledgment 208 confirming that everything went well on its side. When the PMIPv6 Assistant function receives the response from the HA, it sends it over to the PMIPv6 function to verification. Having successfully verified the acknowledgment from HA, the PMIPv6 function informs the PMIPv6 Assistant function in the R3_Finalize.Response 210 that the response from HA is valid. Upon receipt of this confirmation, the PMIPv6 Assistant function registers itself with the local R6 data path function for this MS. From this point on, it will receive all uplink packets sent by MS, it will encapsulate them and forward them to the HA. And any packets the target AR receives from the HA will be delivered to this PMIPv6 Assistant function for decapsulation and further delivery to the appropriate R6 data path function.

The address renewal shall now be discussed. ARs will need to periodically send RouterAdvertisments to the MS in order to refresh the prefix lifetime. All ARs will advertise the same prefix to the MS: the home link prefix of the MS. Frequency of the RouterAdvertisment messages sent to MS is correlated with the advertised lifetime of the home link prefix. AR may choose to wait for solicitation from MS, or it may send RouterAdvertisement unsolicited. Later option is better, since it saves a couple of bytes on the radio link (no RouterSolicitation will be sent at all).

The home link prefix needs to be known by each AR where the MS is attached, since each AR must advertise the same prefix to the MS. The home link prefix, its lifetime and the timestamp when it was advertised last time will be stored as part of the MS context. This info will be transferred to the target AR, together with other context data, during the ASN-anchored handover. Additionally, all ARs use the same source IP address when sending RouterAdvertisement to the MS, otherwise the deception would not be perfect. The same goes for source link-layer address option, if it is contained in the advertisement message. Note that all ARs in the ASN could be preconfigured with one (virtual) IP address (and also virtual MAC address in case the source link-layer address option is used) which is used as a source address in RouterAdvertisements, so from the perspective of the MS the whole ASN would be considered as just one IPv6 router.

WiMAX network architecture in Rel. 1 provides no solution how an IPv6 device not supporting MIPv6 can attach to the WiMAX network. This proposal shows how such support could be added to WiMAX Rel. 1.

The technical solution described here does not require any changes to the HA or to the MS. All the changes are localized just to the ASN. Each MS is fooled into believing that it is attached to its home link. And this illusion is maintained across handovers, thus avoiding the service disruption at the network layer introduced by the MIPv6 [4] handovers. Also, the lengthy DAD process (1+ seconds) which is necessary after the network layer handover is completely avoided.

Advertisement of the home link prefix to the MS when it is away from home link is the foundation of the described solution. To my best knowledge, this idea has not been described before, especially not in the WiMAX Forum standardization. The AR(s) is(are) advertising different home link prefixes to different MS-es, and advertisement messages are sent as link-layer unicast only to the particular MS.

References
[1] WiMAX NWG Stage 2, "WiMAX End-to-End Network System Architecture", Dez. 2005 http://www.wimaxforum.org/apps/org/workgroup/nwg/download. php/5096/051215_NwG_Stage-2.zip
   (WiMAX internal specification draft, available only to registered members)
[2] RFC2461 - Simpson, Neighbor Discovery for IP Version 6 (IPv6), Narten and Nordmark, December 1998, Standards Track
[3] RFC2462 - IPv6 Stateless Address Auto-configuration, Thomson and Narten, December 1998, Standards Track
[4] RFC 3775 - Mobility Support in IPv6, D. Johnson, C. Perkins, J. Arkko, June 2004, Standards Track
[5] RFC2865 - Remote Authentication Dial In User Service (RADIUS), C. Rigney, et al., June 2000, Standards Track
Acronyms
- AAA: Authentication, Authorization and Accounting
- AR: Access Router
- ASN: WiMAX Access Serving Network
- BAck: Binding Update Acknowledge
- BS: WiMAX Base Station
- BU: Binding Update
- CSN: WiMAX Connectivity Serving Network
- CoA: Care-of Address
- DAD: Duplicate Address Detection
- DHCP: Dynamic Host Configuration Protocol
- FQDN: Fully Qualified Domain Name
- H-AAA: Home AAA server (located in the home network of the
- WiMAX: subscriber)
- HA: Home Agent
- HoA: Home Address
- LLA: Link-local Address
- MIP: Mobile IP
- MS: WiMAX Mobile Station
- NAI: Network Access Identifier
- NAP: WiMAX Access Network Provider (operator of an ASN)
- ND: Neighbor Discovery
- NSP: WiMAX Network Service Provider (operator of a CSN)
- PMIP: Proxy Mobile IP
- R3: Reference point between ASN and CSN
- V-AAA: visited AAA server (located in the visited network)

## Claims

1. A method for providing a network that supports a mobile station with IPv6 functionality after handover, the network performing the steps of:
- an access router applying a home link prefix,
- handing over the mobile station to a target access router,
- receiving by the target access router the home link prefix,
**characterized in that** the target access router advertises the home link prefix to the mobile station.

2. The method of claim 1, further comprising the step of advertising by a target access router, after handover from the access router, the home link prefix to the mobile station.

3. The method of the preceding claims, further comprising the step of all access routers of the mobile station advertise the same home prefix link.

4. The method of the preceding claims, further comprising the step of acquiring the home link prefix during authentication.

5. The method of the preceding claims, further comprising the step of generating a neighbor solicitation packet by the mobile station for the access router.

6. The method of the preceding claims, further comprising the step of generating by the a binding update message for a home agent.

7. The method of the preceding claims, further comprising the step of generating by the home agent a binding acknowledgement signal for the access router.

8. A network that provides IPv6 functionality established according to the method of any of the preceding claims.

9. The network of claim 8, wherein the network is WiMAX.

## Amended claims

### Amended claims in accordance with Rule 86(2) EPC.

**1.** A method for providing a network that supports a mobile station with IPv6 functionality after handover, the network performing the steps of:
- an access router receiving a home link prefix from a home agent of the mobile station (106),
- handing over the mobile station to a target access router,
- receiving by the target access router the home link prefix (110),
**characterized in that** the target access router advertises (112) the home link prefix to the mobile station.

**2.** The method of claim 1, further comprising the step of advertising (112) by a target access router, after handover from the access router, the home link prefix to the mobile station.

**3.** The method of the preceding claims, further comprising the step of all access routers of the mobile station advertise (112) the same home prefix link.

**4.** The method of the preceding claims, further comprising the step of acquiring (106) the home link prefix during authentication.

**5.** The method of the preceding claims, further comprising the step of generating a neighbor solicitation packet (102) by the mobile station for the access router.

**6.** The method of the preceding claims, further comprising the step of generating a binding update message for a home agent (106).

**7.** The method of the preceding claims, further comprising the step of generating by the home agent a binding acknowledgement signal (110) for the access router.

**8.** A network that provides IPv6 functionality established according to the method of any of the preceding claims, that includes
- an access router that receives a home link prefix from a home agent of the mobile station (106),
- a target access router that is handed over the mobile station,
- target access router receiving the home link prefix (110),
**characterized in that** the target access router advertises (112) the home link prefix to the mobile station.

**9.** The network of claim 8, wherein the network is a WiMAX network.
